## Europäisches Patentamt

## European Patent Office

## Office européen des brevets

(11) Veröffentlichungsnummer: **0 214 618**
**A2**

(12) # EUROPÄISCHE PATENTANMELDUNG

(21) Anmeldenummer: 86112233.1

(22) Anmeldetag: 04.09.86

(51) Int. Cl.⁴: **A23L 3/22** , A23C 3/033

(30) Priorität: 11.09.85 DE 3532394

(43) Veröffentlichungstag der Anmeldung:
18.03.87 Patentblatt 87/12

(84) Benannte Vertragsstaaten:
**AT BE CH DE FR GB IT LI LU NL SE**

(71) Anmelder: **Finnah GmbH
Einsteinstrasse 18
D-4422 Ahaus(DE)**

(72) Erfinder: **Finnah, Josef
Schäfingskamp 5
D-4422 Ahaus(DE)**

(74) Vertreter: **Busse & Busse Patentanwälte
Postfach 1226 Grosshandelsring 6
D-4500 Osnabrück(DE)**

(54) **Verfahren und Vorrichtung zur die Haltbarkeit erhöhenden Wärmebehandlung, insbesondere Ultrahocherhitzung, von Keime enthaltenden Produkten.**

(57) Bei dem Verfahren zur die Haltbarkeit erhöhenden Wärmebehandlung, insbesondere Ultrahocherhitzung, von Keime enthaltenden Produkten, wird ein Produktstrom auf einem in ganzer Länge mit zumindest annähernd konstanter Strömungsgeschwindigkeit zurückgelegten Strömungsweg in indirektem Wärmeaustausch mit einem in Austauschbereichen in entgegengesetzter Richtung strömenden Wärmeträgermedium unter Wärmerückgewinnung auf Behandlungsendtemperatur erhitzt und anschließend abgekühlt. Dabei wird der Produktstrom am Beginn eines die Behandlungsendtemperatur einschließenden Hochtemperaturbereichs in parallele, untereinander mengengleiche Teilströme verzweigt und die Teilströme werden auf ihren getrennten Teilströmungswegen untereinander gleichen Behandlungsbedinungen ausgesetzt. Am Ende des Hochtemperaturbereichs werden dann die Teilströme wieder zu einem Gesamtstrom vereinigt.

## Verfahren und Vorrichtung zur die Haltbarkeit erhöhenden Wärmebehandlung, insbesondere Ultrahocherhitzung, von Keime enthaltenden Produkten

Die Erfindung bezieht sich auf ein Verfahren sowie eine Vorrichtung zur die Haltbarkeit erhöhenden Wärmebehandlung, insbesondere Ultrahocherhitzung, von Keime enthaltenden Produkten gemäß dem Oberbegriff des Anspruchs 1 bzw. des Anspruchs 5.

Ausgehend von einem bekannten Verfahren bzw. einer bekannten Vorrichtung dieser Art (DE-PS 30 10 013, EP-PS 0 036 124) liegt der Erfindung die Aufgabe zugrunde, die Wärmebelastung des Produktes und daraus resultierende qualitätsmindernde Einflüsse während der Wärmebehandlung zu verringern.

Das erfindungsgemäße Verfahren löst diese Aufgabe mit den Merkmalen des kennzeichnenden Teils des Anspruchs 1. Die Vorrichtung nach der Erfindung ist zur Lösung der genannten Aufgabe gekennzeichnet durch die Merkmale des kennzeichnenden Teils des Anspruchs 5.

Durch die Aufteilung des Produktstromes im Hochtemperaturbereich, für Milch z.B. im Bereich oberhalb etwa 90°, in zwei oder mehr parallele, untereinander mengengleiche Teilströme, die unter zumindest annähernder Beibehaltung ihrer Strömungsgeschwindigkeit auf ihren getrennten Teilströmungswegen untereinander gleichen Behandlungsbedingungen ausgesetzt werden, ist es möglich, die Verweilzeit des den Hochtemperaturbereich durch strömenden Produktes zu verringern. Und diese Verringerung der Verweilzeit in jenem Hochtemperaturbereich, bei dessen Durchlaufen qualitätsmindernde Wirkungen auf das Produkt ausgeübt werden, sichert bei zuverlässiger Keimabtötung, bei Milch insbesondere der thermophilen Sporen, eine erhebliche Herabsetzung der Produktschäden mit der Folge, daß bei gleichzeitig verkürztem Verfahrensablauf das behandelte Produkt seine natürliche Qualität weitgehend beibehält.

Hinsichtlich weiterer Ausgestaltungen wird auf die Ansprüche 2 bis 4 sowie 6 bis 8 verwiesen.

Verfahren und Vorrichtung nach der Erfindung werden anhand der Zeichnung nachfolgend näher erläutert, in der ein Ausführungsbeispiel einer erfindungsgemäßen Vorrichtung schematisch näher veranschaulicht ist. Im einzelnen zeigen:

Fig. 1 eine Darstellung einer herkömmlichen Vorrichtung zur Wärmebehandlung von Keime enthaltenden Produkten in Gestalt eines Fließschema,

Fig.2 eine Darstellung ähnlich Fig. 1 einer erfindungsgemäßen Vorrichtung mit einer Verzweigung des Produktstromes im Hochtemperaturbereich in zwei parallele Teilströme, und

Fig. 3-6 Temperatur/Zeit-Diagramme der Wärmebehandlung eines Produktes unter verschiedenen Betriebsbedingungen.

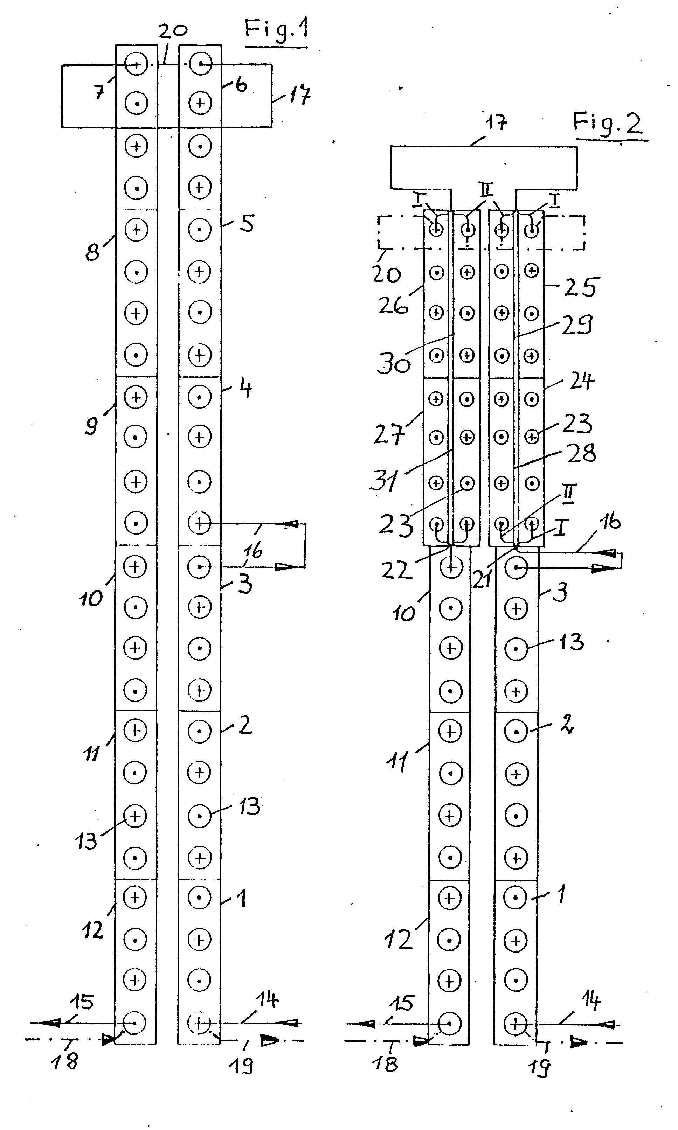

Die Fig. 1 veranschaulicht in Gestalt eines Beispiels eine Vorrichtung bekannter Art, die zu Vergleichszwecken nachfolgend erläutert wird. Diese Vorrichtung weist zwölf Gruppen 1 bis 12 von je vier einzelnen Wärmeaustauschern 13 auf. Die insgesamt achtundvierzig Wärmeaustauscher 13 sind in Reihe hintereinander geschaltet und definieren zusammen mit nicht näher veranschaulichten Verbindungsleitungen einen durchgehenden Strömungsweg für das Produkt zwischen einem Produkteintritt bei 14 in den in Strömungsrichtung des Produktes ersten Wärmeaustauscher 13 in der Gruppe 1 und einem Produktaustritt 15 aus dem in Strömungsrichtung des Produkts letzten Wärmeaustauscher 13 der Gruppe 12. Zwischen den in Strömungsrichtung des Produkts letzten Wärmeaustauscher der Gruppe 3 und ersten Wärmeaustauscher der Gruppe 4 ist ein bei 16 - schematisch versinnbildlichter Heißhalter für eine Zwischenheißhaltung (bei z.B. etwa 90° für Milch) vorgesehen. Ein weiterer, schematisch bei 17 veranschaulichter Heißhalter ist zwischen dem in Strömungsrichtung des Produkts letzten Wärmeaustauscher 13 der Gruppe 6 und ersten Wärmeaustauscher der Gruppe 7 zwischengeordnet. Er dient zur vorübergehenden Heißhaltung des Produkts auf Behandlungsendtemperatur, die in dem in Strömungsrichtung des Produkts letzten Wärmeaustauscher 13 der Gruppe 6 erreicht wird.

Die Wärmeaustauscher definieren zusammen mit nicht näher veranschaulichten Verbindungsleitungen ferner einen durchgehenden Strömungsweg für ein Wärmeträgermedium, das vorzugsweise in einem Kreislauf geführt ist. Dabei durchströmt es die Wärmeaustauscher 13 in Gegenrichtung. Das Wärmeträgermedium tritt in Fig. 1 bei 18 in den in Strömungsrichtung des Produktes letzten Wärmeaustauscher 13 der Gruppe 12 ein und - schließlich nach Durchströmen sämtlicher Wärmeaustauscher 13 aus dem in Strömungsrichtung des Produktes ersten Wärmeaustauscher 13 in der Gruppe 1 bei 19 aus. Der Übergang von dem in Strömungsrichtung des Produktes ersten Wärmeaustauscher 13 der Gruppe 7 zu dem in Strömungsrichtung des Produktes letzten Wärmeaus tauscher 13 der Gruppe 6 ist bei 20 durch eine Leitung versinnbildlicht. Als Wärmeaustauscher 13 finden Rohrbündeltauscher Verwendung deren sieben vom Produkt durchströmten Rohre je Einheit eine Länge von 3 m und

einen Innendurchmesser $d_1$ von 12 mm aufweisen und in einem zylindrischen Außenmantel untergebracht sind, der einen Durchmesser von 49 mm besitzt. Hinsichtlich näherer Einzelheiten wird auf die DE-PS 30 10 013 verwiesen.

Der Gesamtquerschnitt des Strömungsweges für das Produkt ist über die gesamte Weglänge gleich, so daß das Produkt die achtundvierzig Wärmeaustauscher 13 der Vorrichtung mit im wesentlichen gleichbleibender Strömungsgeschwindigkeit durchströmt. Dies gilt auch für den Strömungsweg für das Wärmeträgermedium. Der Gesamtquerschnitt des Produktströmungsweges kann von dem des Wärmeträgermediums abweichen.

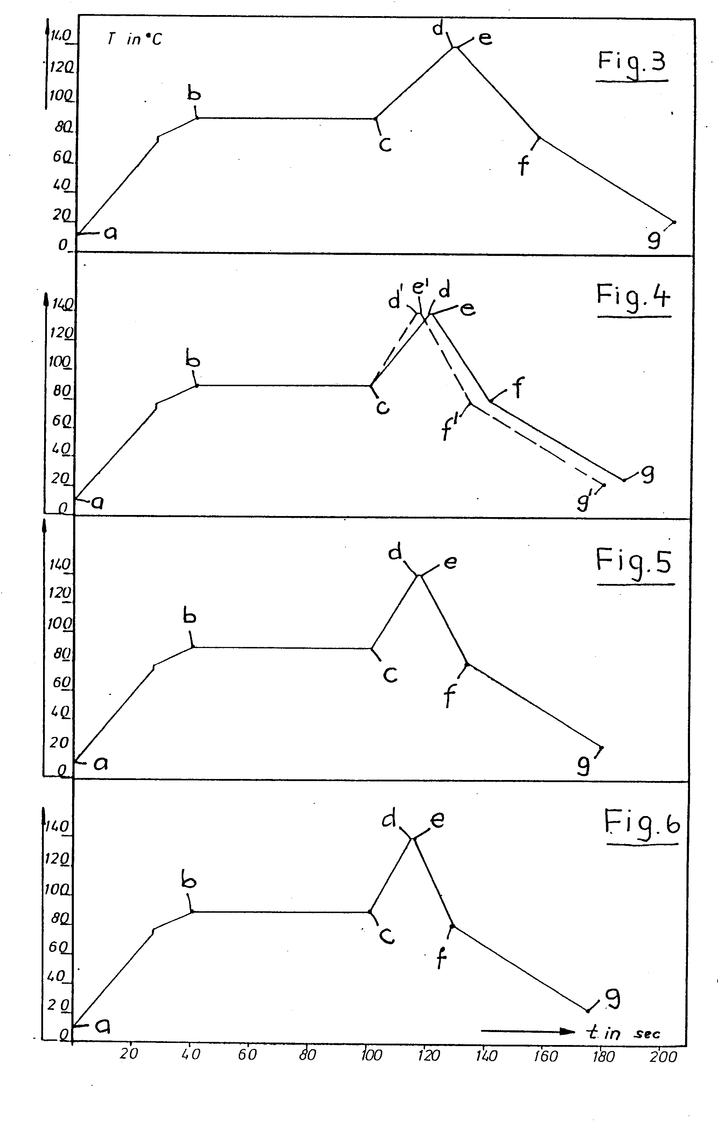

Eine sich für ein bestimmtes Produkt, z.B. Milch, bei Durchlaufen der Vorrichtung in Fig. 1 beispielsweise ergebende Temperaturverlaufskurve ist in Fig. 3 prinzipiell veranschaulicht.

Die betrachtungswesentlichen Punkte der Temperaturverlaufskurve in Fig. 3 sind -ebenso wie die entsprechenden Punkte der Temperaturverlaufskurven in Fig. 4 -6 -mit a,b,c,d,e,f und g bezeichnet, wobei in einem bereichsweise abweichenden Kurvenverlauf in Fig. 4 entsprechende Punkte auch mit d',e',f' und g' bezeichnet sind.

Die Aufwärmung zwischen den Punkten a und b erfährt das Produkt in den Wärmeaustauschern 13 der Gruppen 1 bis 3. Die Heißhaltung im Heißhalter 16 gibt der Kurvenverlauf zwischen den Punkten b und c wieder. Der Hochtemperaturbereich ist der Kurvenbereich zwischen den Punkten c und f, wobei die Behandlungsendtemperatur bei d am Austritt aus dem in Produktströmungsrichtung letzten Wärmeaustauscher 13 der Gruppe 6 erreicht wird. Die Heißhaltung zwischen den Punkten d und e wird durch den Heißhalter 17 herbeigeführt, und die Abkühlung zwischen den Punkten e und f erfolgt in den Wärmeaustauschern 13 der Gruppen 7 bis 9. Die weitere Abkühlung zwischen den Punkten f und d erfolgt schließlich in den Wärmeaustauschern 13 der Gruppen 10 bis 12. Dementsprechend gehören die Wärmeaustauscher 13 der Gruppen 4 bis 9 dem Hochtemperaturbereich an, der im vorliegenden Falle als jener Temperaturbereich zu verstehen ist, bei dessen Durchlaufen das Produkt eine Wärmebelastung, d.h. eine qualitätsmindernde Veränderung, erfährt. Für Milch kann dieser Bereich oberhalb etwa 90° angesetzt werden. Unterstellt man als Wärmeaustauscher 13 Rohrbündeltauscher gemäß obiger Ausbildung, so ergibt sich der Gesamtströmungsquerschnitt des Strömungsweges für das Produkt mit $Q_1 = 791,28$ mm². Die Produktweglänge in den vierundzwanzig Wärmeaustauschern 13 des Hochtemperaturbereichs beläuft sich auf $l_1 = 72$ m, und zwar unter Außerachtlassung aller Strömungsweglängen in Verbindungsleitungen bzw. den Heißhaltern. Unterstellt man eine Strömungsgeschwindigkeit von $v_1$ = 1,3 m/s so ergibt sich für den Hochtemperaturbereich eine Prozeßzeit von $t_1$ = 55,38 s. Die Wärmeübergangsgesamtfläche des Hochtemperaturbereiches beträgt $F_1 = 18,990$ m².

Bei der erfindungsgemäßen Vorrichtung gemäß Fig. 2 sind zunächst für die Produkterwärmung bishin zum Hochtemperaturbereich gleiche drei Gruppen 1 bis 3 an Wärmeaustauschern 13 wie bei der Vorrichtung gemäß Fig. 1 vorgesehen. Auch schließt sich an den in Strömungsrichtung des Produktes letzten Wärmeaustauscher 13 in der Gruppe 3 ein Heißhalter 16 wie bei der Vorrichtung gemäß Fig. 1 an. Übereinstimmung besteht auch im Abkühlungsbereich unterhalb des Hochtemperaturbereiches, wo ebenfalls wie in Fig. 1 drei Gruppen 10,11,12 an Wärmeaustauschern 13 vorgesehen sind.

Im Unterschied zur Fig. 1 verzweigt sich jedoch der Produktstrom am Beginn des Hochtemperaturbereiches, d.h. unmittelbar nach Verlassen des Heißhalters 16, an einem Verzweigungspunkt 21 in zwei Teilströme I und II, die am Ende des Hochtemperaturbereiches, d.h. vor Eintritt in den in Strömungsrichtung des Produkts ersten Wärmeaustauscher 13 der Gruppe 10, an einem Wiedervereinigungspunkt 22 wieder zu einem Gesamtstrom vereinigt werden. Zwischen den Punkten 21,22 durchlaufen die untereinander mengengleichen Teilströme I,II zueinander parallele Teilströmungswege, entlang denen sie untereinander gleichen Behandlungsbedingungen ausgesetzt werden. Der Teilströmungsweg für den Teilstrom I wird von sechzehn in Reihe hintereinandergeschalteten, durch Verbindungsleitungen verbundenen Wärmeaustauschern 23 gebildet, von denen je vier Wärmeaustauscher 23 Gruppen 24,25,26 und 27 zugeordnet sind. Sechzehn in Reihe hintereinandergeschaltete Wärmeaustauscher 23 gleicher Art bilden zusammen mit den zugehörigen Verbindungsleitungen den Strömungsweg für den Teilstrom II, wobei je vier Wärmeaustauscher 23 für den Teilstrom II ebenfalls vier Gruppen 28,29,30 und 31 zugeordnet sind.

Die Wärmeaustauscher 23 sind wiederum Rohrbündelwärmetauscher mit je sieben untereinander gleichen, vom Produkt durchströmten Rohren einer Länge von 3 m und einem Innendurchmesser von $d_2$. Zur Gleichhaltung der Strömungsgeschwindigkeit $v_2$ mit der Strömungsgeschwindigkeit $v_1$ in den Wärmeaustauschern 13 der Gruppen 1 bis 3 und 10 bis 12 ist der Durchmesser $d_2$ der Rohre nach der Gleichung $d_2 = d_1/\sqrt{7} = 8,52$ mm bemessen. Bei einer denkbaren Aufteilung in drei Teilströme würden die Teil-Wärmeaustauscher bei unveränderter Länge je Einheit einen Rohrinnendurchmesser von $d_3$ =

$d_1/\sqrt{3}$ annehmen müssen, um unveränderte Strömungsgeschwindigkeiten in allen Bereichen des Gesamtströmungsweges sicherzustellen. Generell gilt die Beziehung $d_n = d_1/\sqrt{n}$, wobei n die Zahl der Teilströme bezeichnet.

Das Produkt in den Teilströmen I,II wird untereinander gleichen Behandlungsbedingungen ausgesetzt, die qualitativ jenen der Vorrichtung nach Fig. 1 mit ungeteilter Stromführung des Produktes entsprechen, um die gleiche Behandlungsendtemperatur zu erreichen. Dafür muß sichergestellt werden, daß die Wärmeübergangsgesamtfläche im Hochtemperaturbereich der erfindungsgemäßen Vorrichtung der einer entsprechenden Vorrichtung mit einteiliger Stromführung (Fig. 1) zumindest annähernd gleich ist. Zu diesem Zweck ist bei der erfindungsgemäßen Vorrichtung die Strömungsweglänge für jeden Teilstrom nach der Beziehung $l_n = l_1/\sqrt{n}$ verringert. Statt $l_1 = 72$ m Weglänge des Strömungsweges im Hochtemperaturbereich bei der Vorrichtung gemäß Fig. 1 werden bei der Vorrichtung gemäß Fig. 2 nur $l_2 = 51,06$ m für jeden Strömungsweg I und II benötigt. Dies entspricht rechnerisch siebzehn Wärmeaustauschern 23 je Teilströmungsweg, jedoch genügen auch sechzehn Wärmeaustauscher 23 wie in Fig. 2 bei $d_2$ der Rohre mit 9 mm.

Entsprechend der Verkürzung der Weglänge der Teilströmungswege im Hochtemperaturbereich der erfindungsgemäßen Vorrichtung verkürzt sich die Prozeßzeit nach der Bedingung $t_n = t_1/\sqrt{n}$.

Die Verkürzung der Prozeßzeit für den Hochtemperaturbereich auf 71% bei einer Aufteilung des Produktstromes in zwei Teilströme erbringt bereits eine wesentliche Minderung der Wärmebelastung des behandelten Produktes und damit eine wesentliche Verbesserung seiner Qualität. Mit einer Aufteilung des Produktstromes in drei Teilströme läßt sich die Prozeßzeit auf 57%, und bei einer Aufteilung in vier Teilströme auf 50% senken. Jedoch steigt mit der Zahl der Teilströme der apparative Aufwand, was nur bei ganz besonders empfindlichen Produkten in Kauf zu nehmen sein wird. Die Fig. 5 zeigt die Temperaturverlaufskurve bei Aufteilung des Produktstromes in drei Teilströme und die Fig. 6 die Temperaturverlaufskurve bei einer Aufteilung in vier Teilströme.

Eine Möglichkeit zur zusätzlichen Reduzierung der Prozeßzeit im Hochtemperaturbereich besteht darin, die Strömungsgeschwindigkeit der Teilströme des Produktes im Hochtemperaturbereich etwas zu erhöhen, z.B. in einem Bereich von 5 bis 25%. Damit geht eine entsprechende prozentuale Verkürzung der Prozeßzeit einher, und die Wärmeübergangsgesamtfläche des Hochtemperaturbereiches verringert sich etwas wegen der Verkleinerung der Rohrdurchmesser. Dies wird jedoch kompensiert durch einen besseren Wärmeübergang, so daß sich eine solche Möglichkeit als Alternative zu einer Vergrößerung der Zahl der Teilströme z.B. auf 3 anbietet. Der Temperaturkurvenverlauf bei einer Vorrichtung gemäß Fig. 2 mit um 20% im Hochtemperaturbereich gegenüber den übrigen Bereichen erhöhter Strömungsgeschwindigkeit des Produktes ist in Fig. 4 gestrichelt veranschaulicht.

Ebenso wie in Fig. 2 der Strömungsweg für das Produkt in Teilströmungswege I,II aufgeteilt ist, wird auch der Strömungsweg für das Wärmeträgermedium entsprechend aufgeteilt. Die Aufteilung erfolgt dabei an einem nicht näher veranschaulichten Verzweigungspunkt nach Verlassen des in Strömungsrichtung des Wärmeträgermediums letzten Wärmeaustauschers 13 der Gruppe 10. Das Wärmeträgermedium durchströmt in Teilströmen die Wärmeaustauscher 23 im Bereich der von den jeweiligen Außenmänteln umgrenzten Mantelräume, und die Wiedervereinigung des Wärmeträgermediums erfolgt unmittelbar vor dem in Strömungsrichtung des Wärmeträgermediums ersten Wärmeaustauscher 13 der Gruppe 3.

Grundsätzlich kann der Produktstrom in seiner gesamten Länge zwischen dem Verzweigungspunkt 21 und dem Wiedervereinigungspunkt 22 in Teilströme unterteilt bleiben, d.h. auch im Bereich des Heißhalters 17. Zur Erleichterung der Steuerung der Heißhaltung ist allerdings bei dem Ausführungsbeispiel nach Fig. 2 und bevorzugtermaßen vorgesehen, daß die Teilströme I,II im Bereich der Heißhaltung im Heißhalter 17 eine vorübergehende und auf den Heißhalter 17 beschränkte Wiedervereinigung erfahren.

**Ansprüche**

1. Verfahren zur die Haltbarkeit erhöhenden Wärmebehandlung, insbesondere Ultrahocherhitzung, von Keime enthaltenden Produkten, bei dem ein Produktstrom auf einem in ganzer Länge mit zumindest annähernd konstanter Strömungsgeschwindigkeit zurückgelegten Strömungsweg in indirektem Wärmeaustausch mit einem in Austauschbereichen in entgegengesetzter Richtung strömenden Wärmeträgermedium unter Wärmerückgewinnung auf Behandlungsendtemperatur erhitzt und anschließend abgekühlt wird, dadurch gekennzeichnet, daß der Produktstrom am Beginn eines die Behandlungsendtemperatur einschließenden Hochtemperaturbereichs in parallele, untereinander mengengleiche Teilströme verzweigt wird, die Teilströme auf ihren getrennten Teilströmungswegen untereinander gleichen Behandlungsbedingungen ausgesetzt werden, und die Teilströme am Ende des Hochtemperaturbereichs wieder zu einem Gesamtstrom vereinigt werden.

2. Verfahren nach Anspruch 1, dadurch gekennzeichnet, daß der Produktstrom in zwei Teilströme verzweigt wird.

3. Verfahren nach Anspruch 1 oder 2, dadurch gekennzeichnet, daß im Bereich der Teilströmungswege die Strömungsgeschwindigkeit der Teilströme etwas erhöht wird.

4. Verfahren nach einem oder mehreren der Ansprüche 1 bis 3, dadurch gekennzeichnet, daß die Teilströme im Bereich einer Heißhaltung auf Behandlungsendtemperatur vorübergehend zwischenvereinigt werden.

5. Vorrichtung für eine die Haltbarkeit erhöhende Wärmebehandlung, insbesondere Ultrahocherhitzung, von Keime enthaltenden Produkten, mit einer Mehrzahl von in Reihe hintereinandergeschalteten Wärmeaustauschern, in denen ein Produktstrom in indirektem Gegenstrom-Wärmeaustausch mit einem Wärmeträgermedium unter Wärmerückgewinnung auf Behandlungsendtemperatur erhitzt und anschließend abgekühlt wird, wobei die durch Leitungen für das Produkt und solche für das Wärmeträgermedium untereinander verbundenen Wärmeaustauscher mit den Leitungen je einen fortlaufenden Strömungsweg über dessen Länge annähernd gleichbleibenden Gesamtquerschnitts für das Produkt und das in den Wärmeaustauschbereichen in Gegenrichtung fließende Wärmeträgermedium bilden, dadurch gekennzeichnet, daß der Strömungsweg für das Produkt und der für das Wärmeträgermedium in einem die Behandlungsendtemperatur einschließenden Hochtemperaturbereich in untereinander gleiche, von einem Verzweigungspunkt (21) bis zu einem Wiedervereinigungspunkt (22) parallelverlaufende Teilströmungswege (I,II) mit durch Teilleitungen verbundenen, hintereinandergeschalteten Teil-Wärmeaustauschern (23) unterteilt ist, und daß die Strömungsquerschnitte der Teilströmungswege für das Produkt einerseits und für das Wärmträgermedium andererseits jeweils untereinander gleich sind und je zumindest annähernd einen der Anzahl (n) der Teilströmungswege entsprechenden Bruchteil des Strömungsquerschnitts des unverzweigten Strömungsweges aufweisen.

6. Vorrichtung nach Anspruch 5, dadurch gekennzeichnet, daß die Summe der Strömungsquerschnitte der Teilströmungswege (I,II) für das Produkt den Strömungsquerschnitt des unverzweigten Produktströmungsweges etwas unterschreitet.

7. Vorrichtung nach Anspruch 5 oder 6, dadurch gekennzeichnet , daß bei Ausbildung der Wärmeaustauscher (23) als Rohrbündeltauscher mit vom Produkt durchströmten Kreisrohren untereinander gleichen Durchmessers und einem den Strömungsweg für das Wärmeträgermedium umgrenzenden Außenmantel die Länge jeden Teilströmungsweges (I,II) im Hochtemperaturbereich jeweils um einen Faktor $1/\sqrt{n}$ kleiner ist als die im Hochtemperaturbereich verlaufende Weglänge des Strömungsweges einer Vorrichtung mit unverzweigtem Produktstrom.

8. Vorrichtung nach einem oder mehreren der Ansprüche 5 bis 7, dadurch gekennzeichnet, daß in einem Heißhalter (17) für eine Heißhaltung des Produktes auf Behandlungsendtemperatur die Teilströmungswege (I,II) wieder zu einem Gesamtströmungsweg zusammengefaßt sind, der sich am Ausgang aus dem Heißhalter wieder in die Teilströmungswege verzweigt.

Fig.1

Fig.2

0 214 618

Fig. 3

Fig. 4

Fig. 5

Fig. 6